# EUROPEAN PATENT APPLICATION

(11) **EP 4 654 670 A1**
(43) Date of publication of application: **26.11.2025**
(21) Application number: 24752751.8
(22) Date of filing: 31.01.2024
(51) Int. Cl.: H04W 48/16

(54) **COMMUNICATION METHODS, AND APPARATUS**

(30) Priority: 10.02.2023 CN 202310134315
(71) Applicant: Huawei Technologies Co., Ltd., Shenzhen, Guangdong 518129 (CN)
(72) Inventor: DENG, Taoyu, Shenzhen, Guangdong 518129 (CN); LI, Yongcui, Shenzhen, Guangdong 518129 (CN); WANG, Yaxin, Shenzhen, Guangdong 518129 (CN); NI, Hui, Shenzhen, Guangdong 518129 (CN)
(74) Representative: Goddar, Heinz J.
(86) International application number: PCT/CN2024/074835
(87) International publication number: WO 2024/164895

(57) **Abstract**

This application provides a communication method and apparatus. The method includes: A first network element receives first information, where the first information indicates each terminal device in a device group to access a first service by using a first address. The first network element indicates a first terminal device in the device group to clear a second address, where the second address includes an address at which the first terminal device has previously accessed the first service. Further, the first network element indicates a second network element to provide the first address, so that the first terminal device accesses the first service by using the first address. According to this method, the first network element indicates the first terminal device that is in the device group and that has previously accessed the first service to access the first service by using the first address corresponding to the device group, to improve quality of service for the first terminal device.

## Description

This application claims priority to Chinese Patent Application No. 202310134315.4, filed with the China National Intellectual Property Administration on February 10, 2023 and entitled "COMMUNICATION METHOD AND APPARATUS", which is incorporated herein by reference in its entirety.

### TECHNICAL FIELD

This application relates to the communication field, and in particular, to a communication method and apparatus.

### BACKGROUND

A terminal device sends a domain name system (domain name system, DNS) query message to an edge application server discovery function (edge application server discovery function, EASDF) network element, to obtain address information corresponding to a service and access an edge application server (Edge Application Server, EAS) based on the address information, so that the EAS provides a business service for the terminal device.

When a plurality of terminal devices access a same service, and have a mutual interaction requirement for data of the service, the plurality of terminal devices may be considered as belonging to one device group.

In a conventional technology, a plurality of application servers of an application provider may provide a same service. A service 1 is used as an example. If a terminal device 1 and a terminal device 2 are devices that access the service 1, latency of exchanging data of the service 1 between the terminal device 1 and the terminal device 2 may be high. Consequently, quality of service provided by a network side for the terminal device 1 and the terminal device 2 is poor.

### SUMMARY

Embodiments of this application provide a communication method and apparatus, to facilitate a first terminal device that has previously accessed a first service accessing the first service as a member of a device group by using an address corresponding to the device group to which the first terminal device belongs. This improves quality of service for the first terminal device.

According to a first aspect, an embodiment of this application provides a communication method. The communication method may be applied to a first network element (for example, a device or a chip of the first network element). In the method, the first network element receives first information, where the first information indicates each terminal device in a device group to access a first service by using a first address. The first network element indicates a first terminal device in the device group to clear a second address, where the second address includes an address at which the first terminal device has previously accessed the first service. The first network element indicates a second network element to provide the first address for the first terminal device, so that the first terminal device accesses the first service by using the first address.

According to the method described in the first aspect, the first network element indicates the first terminal device that is in the device group and that has previously accessed the first service to access the first service by using the first address corresponding to the device group, to improve quality of service for the first terminal device.

In a possible implementation, the second address further includes an address at which the first terminal device has previously accessed a second service, and the second service is different from the first service. The implementation helps the first terminal device efficiently clear, based on an indication of the first network element, addresses at which the first service and another service have previously been accessed.

In a possible implementation, the second address further includes an address at which the first terminal device has previously accessed each service other than the first service. In the implementation, it helps the first terminal device efficiently clear, based on an indication of the first network element, addresses at which all services have previously been accessed.

In a possible implementation, before the first network element indicates the first terminal device in the device group to clear the second address, the first network element receives second information, where the second information indicates a terminal device that is in the device group and that needs to clear an address related to the first service. Further, the first network element determines, based on the second information, that the first terminal device needs to clear the second address. By implementing the possible implementation, the first network element determines the first terminal device based on an indication from another device (that is, a device other than the first network element, for example, an access management device corresponding to the first terminal device or a server corresponding to the first service). This reduces computational complexity of determining the first terminal device by the first network element.

In a possible implementation, before the first network element indicates the first terminal device in the device group to clear the second address, the first network element determines, based on a set of an association relationship between a service and a session, a first session that has an association relationship with the first service. Further, the first network element determines that the first terminal device in which the first session is set up needs to clear the second address. By implementing the possible implementation, the first network element may accurately determine the first terminal device (that is, the terminal device in which the first session that has the association relationship with the first service is set up) based on the set of the association relationship between the service and the session. This avoids sending indication information to another terminal device that is in the device group and in which no first session is set up, to reduce signaling overheads.

In a possible implementation, the first network element receives information that is about the first service and that is from the second network element. The first service is a service that supports the device group. The first service has the association relationship with the first session. The first network element stores the association relationship between the first service and the first session. By implementing the possible implementation, the first network element may store the association relationship between the service and the session, to facilitate improving efficiency of obtaining the set of the association relationship between the service and the session by the first network element, and save communication transmission resources.

According to a second aspect, an embodiment of this application provides a communication method. The communication method may be applied to a first terminal device (for example, a device or a chip of the first terminal device). In the method, after learning that a first network element indicates to clear a second address, the first terminal device clears the second address, where the second address includes an address at which the first terminal device has previously accessed a first service, and the first service is a service that supports a device group. The first terminal device receives a first address, where the first address is an address at which each terminal device in a device group to which the first terminal device belongs accesses the first service. Further, the first terminal device accesses the first service by using the first address.

According to the method described in the second aspect, the first terminal device that is in the device group and that has previously accessed the first service may access the first service by using the first address corresponding to the device group to which the first terminal device belongs. This ensures that the first terminal device accesses the first service by using an address corresponding to the device group, to improve quality of service for the first terminal device.

In a possible implementation, the first address is different from the second address. By implementing the possible implementation, when the second address at which the first terminal device has previously accessed the first service is different from the first address corresponding to the device group, the first terminal device clears the second address. This ensures that the first terminal device accesses the first service by using the first address corresponding to the device group, to improve the quality of service for the first terminal device.

In a possible implementation, the second address further includes an address at which the first terminal device has previously accessed a second service, and the second service is different from the first service. By implementing the possible implementation, the first terminal device may efficiently clear, based on an indication of the first network element, addresses at which all services have previously been accessed.

In a possible implementation, the second address further includes an address at which the first terminal device has previously accessed each service other than the first service. By implementing the possible implementation, the first terminal device may efficiently clear, based on an indication of the first network element, addresses at which all services have previously been accessed.

In a possible implementation, the first terminal device sends an address query request to a second network element, where the address query request includes information about the first service, the first service is the service that supports the device group, and the first service has an association relationship with a first session. Further, the first terminal device receives the second address from a second network element through the first network element.

According to a third aspect, an embodiment of this application provides a communication method. The communication method may be applied to a first network element (for example, a device or a chip of the first network element) and a first terminal device (for example, a device or a chip of the first terminal device). In the method, the first network element receives first information, where the first information indicates each terminal device in a device group to access a first service by using a first address. The first network element indicates the first terminal device in the device group to clear a second address, where the second address includes an address at which the first terminal device has previously accessed the first service. The first terminal device clears the second address. The first network element indicates a second network element to provide the first address for the first terminal device. Further, the first terminal device accesses the first service by using the first address.

According to a fourth aspect, an embodiment of this application provides a communication method. The communication method may be applied to a first network element (for example, a device or a chip of the first network element) and a second network element (for example, a device or a chip of the second network element), and may be further applied to a first terminal device (for example, a device or a chip of the first terminal device). In the method, the first network element receives first information, where the first information indicates each terminal device in a device group to access a first service by using a first address. The first network element indicates the first terminal device in the device group to clear a second address, where the second address includes an address at which the first terminal device has previously accessed the first service. The first network element indicates the second network element to provide the first address for the first terminal device. The second network element provides the first address for the first terminal device based on an indication of the first network element, so that the first terminal device accesses the first service by using the first address.

According to a fifth aspect, an embodiment of this application provides a communication method. The communication method may be applied to a first network element (for example, a device or a chip of the first network element) and a third network element (for example, a device or a chip of the third network element), and may be further applied to a first terminal device (for example, a device or a chip of the first terminal device). In the method, the third network element sends first information to the first network element, where the first information indicates each terminal device in a device group to access a first service by using a first address. The first network element receives the first information, and indicates the first terminal device in the device group to clear a second address, where the second address includes an address at which the first terminal device has previously accessed the first service. The first network element indicates a second network element to provide the first address for the first terminal device, so that the first terminal device accesses the first service by using the first address.

According to a sixth aspect, an embodiment of this application provides a communication method. The communication method may be applied to a first terminal device (for example, a device or a chip of the first terminal device). In the method, after learning that a third network element indicates to clear a second address, the first terminal device clears the second address, where the second address includes an address at which the first terminal device has previously accessed a first service. The first terminal device receives a first address, where the first address is an address at which each terminal device in a device group to which the first terminal device belongs accesses the first service. The first terminal device accesses the first service by using the first address.

According to the method described in the sixth aspect, the first terminal device that is in the device group and that has previously accessed the first service may access the first service by using the first address corresponding to the device group to which the first terminal device belongs. This ensures that the first terminal device accesses the first service by using an address corresponding to the device group, to improve quality of service for the first terminal device.

In a possible implementation, the first address is different from the second address. By implementing the possible implementation, when the second address at which the first terminal device has previously accessed the first service is different from the first address corresponding to the device group, the first terminal device clears the second address. This ensures that the first terminal device accesses the first service by using the first address corresponding to the device group, to improve the quality of service for the first terminal device.

In a possible implementation, the second address further includes an address at which the first terminal device has previously accessed a second service, and the second service is different from the first service. By implementing the possible implementation, the first terminal device may efficiently clear, based on an indication of the third network element, addresses at which all services have previously been accessed.

In a possible implementation, the second address further includes an address at which the first terminal device has previously accessed each service other than the first service. By implementing the possible implementation, the first terminal device may efficiently clear, based on an indication of the third network element, addresses at which all services have previously been accessed.

According to a seventh aspect, an embodiment of this application provides a communication method. The communication method may be applied to a third network element (for example, a device or a chip of the third network element). In the method, the third network element determines first information, where the first information indicates each terminal device in a device group to access a first service by using a first address. The third network element indicates a first terminal device in the device group to clear a second address, where the second address includes an address at which the first terminal device has previously accessed the first service.

For beneficial effects of the method described in the seventh aspect, refer to the beneficial effects of the sixth aspect. Details are not described herein again.

In a possible implementation, the second address further includes an address at which the first terminal device has previously accessed a second service, and the second service is different from the first service.

In a possible implementation, before the third network element indicates the first terminal device in the device group to clear the second address, the third network element obtains an access record set of the first service. The third network element determines, based on the access record set, that the first terminal device that has previously accessed the first service needs to clear the second address. By implementing the possible implementation, the third network element may accurately determine the first terminal device (that is, a terminal device that has previously accessed the first service) based on the access record set of the first service. This avoids sending indication information to another terminal device that is in the device group and that has not accessed the first service, to reduce signaling overheads.

In a possible implementation, before the third network element indicates the first terminal device in the device group to clear the second address, the third network element sends information about the device group to a first network element. The first network element is configured to provide a session management service for the first terminal device in the device group. Further, the third network element receives indication information from the first network element, where the indication information indicates that a first session for accessing the first service is set up in the first terminal device. The third network element determines, based on the indication information, that the first terminal device needs to clear the second address. By implementing the possible implementation, the third network element may query, from the first network element, the first terminal device (that is, a terminal device in which the first session for accessing the first service is set up) that is in the device group and that has previously accessed the first service. This improves accuracy of determining the first terminal device.

According to an eighth aspect, this application provides a communication method. The communication method is a system side method corresponding to the methods described in the sixth aspect and the seventh aspect. In the method, a third network element determines first information, where the first information indicates each terminal device in a device group to access a first service by using a first address. The third network element indicates a first terminal device in the device group to clear a second address, where the second address includes an address at which the first terminal device has previously accessed the first service. Further, after learning that the third network element indicates to clear the second address, the first terminal device clears the second address, where the second address includes the address at which the first terminal device has previously accessed the first service. The first terminal device receives the first address, where the first address is an address at which each terminal device in the device group to which the first terminal device belongs accesses the first service. The first terminal device accesses the first service by using the first address.

According to a ninth aspect, this application provides a communication method. An embodiment of this application provides the communication method. The communication method may be applied to a first terminal device (for example, a device or a chip of the first terminal device). In the method, the first terminal device clears a second address according to an address storage policy of a first service, where the second address includes an address at which the first terminal device has previously accessed the first service, and the first service is a service that supports a device group. The first terminal device receives a first address, where the first address is an address at which each terminal device in the device group to which the first terminal device belongs accesses the first service. The first terminal device accesses the first service by using the first address.

According to the method described in the ninth aspect, the first terminal device that is in the device group and that has previously accessed the first service may access the first service by using the first address corresponding to the device group to which the first terminal device belongs. This ensures that the first terminal device accesses the first service by using an address corresponding to the device group, to improve quality of service for the first terminal device.

In a possible implementation, the first terminal device receives the address storage policy that is of the first service and that is from a first network element.

In a possible implementation, the first network element is configured to provide the first service for the first terminal device. Alternatively, the first network element is configured to provide a session management service for the first terminal device to access the first service. Alternatively, the first network element is configured to provide a policy management service for the first terminal device to access the first service.

According to a tenth aspect, this application provides a communication apparatus. The communication apparatus includes a module/unit configured to perform any method in the first aspect, includes a module/unit configured to perform any method in the second aspect, includes a module/unit configured to perform any method in the sixth aspect, includes a module/unit configured to perform any method in the seventh aspect, or includes a module/unit configured to perform any method in the ninth aspect.

According to an eleventh aspect, this application provides a communication apparatus. The apparatus may be an apparatus in a first network element, or an apparatus that can be used together with the first network element. Alternatively, the communication apparatus may be a chip or a chip system. The communication apparatus may perform the method in the first aspect. Alternatively, the apparatus may be an apparatus in a third network element, or an apparatus that can be used together with the third network element. Alternatively, the communication apparatus may be a chip or a chip system. The communication apparatus may perform the method in the seventh aspect. Alternatively, the apparatus may be an apparatus in a first terminal device, or an apparatus that can be used together with the first terminal device. Alternatively, the communication apparatus may be a chip or a chip system. The communication apparatus may perform the method in the second aspect, the sixth aspect, or the ninth aspect. A function of the communication apparatus may be implemented by using hardware, or may be implemented by hardware executing corresponding software. The hardware or the software includes one or more units corresponding to the function. The unit may be software and/or hardware. For operations performed by the communication apparatus and beneficial effects thereof, refer to the methods in the first aspect to the ninth aspect, and beneficial effects thereof. Repeated content is not described again.

According to a twelfth aspect, this application provides a computer-readable storage medium. The computer-readable storage medium is configured to store computer-executable instructions. When the computer-executable instructions are executed, a method performed by the first network element in the method according to the first aspect is implemented; a method performed by the first terminal device in the method according to the second aspect is implemented; a method performed by the first terminal device in the method according to the sixth aspect is implemented; a method performed by the third network element in the method according to the seventh aspect is implemented; or a method performed by the first terminal device in the method according to the ninth aspect is implemented.

According to a thirteenth aspect, this application provides a computer program product including a computer program. When the computer program is executed, a method performed by the first network element in the method according to the first aspect is implemented; a method performed by the first terminal device in the method according to the second aspect is implemented; a method performed by the first terminal device in the method according to the sixth aspect is implemented; a method performed by the third network element in the method according to the seventh aspect is implemented; or a method performed by the first terminal device in the method according to the ninth aspect is implemented.

According to a fourteenth aspect, this application provides a communication system. The communication system includes an apparatus corresponding to the first network element in the method in the first aspect and an apparatus corresponding to the first terminal device in the method in the second aspect. Alternatively, the communication system includes an apparatus corresponding to the first terminal device in the method in the sixth aspect and an apparatus corresponding to the third network element in the method in the seventh aspect. Alternatively, the communication system includes an apparatus corresponding to the first terminal device in the method in the ninth aspect.

### BRIEF DESCRIPTION OF DRAWINGS

FIG. 1a is a diagram of an architecture of a system 100 according to an embodiment of this application;
FIG. 1b is a diagram of a structure of a CN according to an embodiment of this application;
FIG. 1c is a diagram of an architecture of an EC network according to an embodiment of this application;
FIG. 2 is a schematic flowchart of discovering an EAS by a terminal device according to an embodiment of this application;
FIG. 3 is a schematic flowchart of a communication method according to an embodiment of this application;
FIG. 4 is a schematic flowchart of another communication method according to an embodiment of this application;
FIG. 5 is a schematic flowchart of still another communication method according to an embodiment of this application;
FIG. 6 is a diagram of a structure of a communication apparatus according to an embodiment of this application; and
FIG. 7 is a diagram of a structure of another communication apparatus according to an embodiment of this application.

### DESCRIPTION OF EMBODIMENTS

The following further describes specific embodiments of this application in detail with reference to accompanying drawings.

Terms "first", "second", and the like in the specification, claims, and accompanying drawings of this application are used to distinguish between different objects, but are not used to describe a specific sequence. In addition, terms "including", "having", and any other variants thereof are intended to cover a non-exclusive inclusion. For example, a process, a method, a system, a product, or a device that includes a series of steps or units is not limited to listed steps or units, but optionally further includes an unlisted step or unit, or optionally further includes another inherent step or unit of the process, the method, the product, or the device.

An "embodiment" mentioned in the specification means that a particular feature, a structure, or a characteristic described with reference to the embodiment may be included in at least one embodiment of this application. The phrase shown in various locations in the specification may not necessarily refer to a same embodiment, and is not an independent or optional embodiment exclusive from another embodiment. It is explicitly and implicitly understood by a person skilled in the art that embodiments described in the specification may be combined with another embodiment.

In this application, "at least one (item)" means one or more, "a plurality of" means two or more, "at least two (items)" means two or three or more, and "and/or" is used to describe an association relationship between associated objects, and represents that three relationships may exist. For example, "A and/or B" may represent: Only A exists, only B exists, and both A and B exist, where A and B may be singular or plural. Character "/" generally represents an "or" relationship between the associated objects. "At least one of the following items (pieces)" or a similar expression thereof refers to any combination of these items, including any combination of singular items (pieces) or plural items (pieces). For example, at least one (piece) of a, b, or c may represent a, b c, "a and b", "a and c", "b and c", or "a, b and c", where a, b and c may be singular or plural.

To better understand embodiments of this application, the following first describes a system architecture mentioned in embodiments of this application.

Technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a new radio (new radio, NR) system, a 5th generation (5th generation, 5G) communication system such as a 3rd generation partner (3rd generation partner project, 3GPP) service-based network architecture (service-based architecture, SBA), or a communication system evolved after 5G such as a 6th generation (6th generation, 6G) communication system.

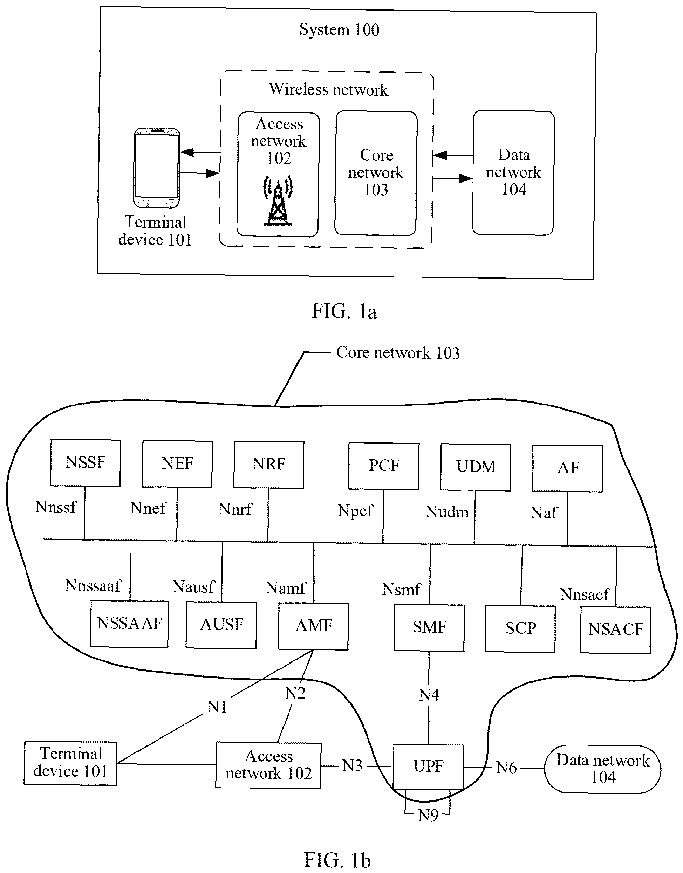

FIG. 1a is a diagram of an architecture of a system 100 according to an embodiment of this application. As shown in FIG. 1a, a terminal device 101 may access a wireless network, to obtain a service of an external network (for example, a data network (data network, DN) 104) over the wireless network, or communicate with another device over the wireless network, for example, communicate with another terminal device. The wireless network includes a (radio) access network ((radio) access network, (R)AN) 102 and a core network (core network, CN) 103. The (R)AN (which is described as a RAN below) 102 is configured to connect a terminal device to the wireless network, and the CN 103 is configured to: manage the terminal device 101, and provide a gateway for communicating with the DN 104. The following separately describes in detail the terminal device 101, the RAN 102, the CN 103, and the DN 104 mentioned in the system architecture in FIG. 1a.

### I. Terminal device 101

The terminal device 101 (which is referred to as a terminal device for short below) includes a device that provides voice and/or data connectivity for a user. For example, the terminal device is a device having wireless receiving and sending functions, and may be deployed on land, including an indoor or outdoor device, a handheld device, a wearable device, or a vehicle-mounted device, may be deployed on water (for example, on a ship), or may be deployed in the air (for example, on an airplane, a balloon, or a satellite). The terminal device may be a mobile phone (mobile phone), a tablet computer (Pad), a computer having wireless receiving and sending functions, a virtual reality (virtual reality, VR) terminal, an augmented reality (augmented reality, AR) terminal, a wireless terminal in industrial control (industrial control), a vehicle-mounted terminal, a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a wearable terminal, or the like. An application scenario is not limited in embodiments of this application. The terminal device may also be sometimes referred to as a terminal, a user equipment (user equipment, UE), an access terminal, a vehicle-mounted terminal, a terminal in industrial control, a UE unit, a UE station, a mobile station, a remote station, a remote terminal, a mobile device, a UE terminal, a wireless communication device, a UE proxy, a UE apparatus, or the like. The terminal may alternatively be fixed or mobile. It may be understood that all or a part of functions of the terminal in this application may alternatively be implemented by using a software function running on hardware, or may be implemented by using an instantiated virtualization function on a platform (for example, a cloud platform). The terminal device in this application may be a 5G terminal or a 6G terminal. This is not limited in this application.

### II. RAN 102

The RAN 102 (which is referred to as a RAN for short below) may include one or more RAN devices (in other words, access network devices). An interface between the access network device and a terminal device may be a Uu interface (or referred to as an air interface). Certainly, in communication evolved after 5G, names of these interfaces may remain unchanged, or may be replaced with other names. This is not limited in this application.

The access network device is a node or a device that enables the terminal device to access the wireless network. The access network device includes, for example, but is not limited to a next generation NodeB (next generation NodeB, gNB) in a 5G communication system, an evolved NodeB (evolved NodeB, eNB), a next generation evolved NodeB (next generation eNB, ng-eNB), a wireless backhaul device, a radio network controller (radio network controller, RNC), a NodeB (NodeB, NB), a home base station ((home evolved NodeB, HeNB) or (home NodeB, HNB)), a baseband unit (baseBand unit, BBU), a transmission reception point (transmission reception point, TRP), a transmission point (transmission point, TP), a mobile switching center, a device that functions as a base station in device-to-device (Device-to-Device, D2D), vehicle-to-everything (vehicle-to-everything, V2X), or machine-to-machine (machine-to-machine, M2M) communication, a central unit (central unit, CU) and a distributed unit (distributed unit, DU) in a cloud access network (cloud radio access network, C-RAN) system, a CU and a DU in an open access network (open RAN, O-RAN or ORAN), a network device that is in a non-terrestrial communication network (non-terrestrial network, NTN) communication system and that may be deployed on a high-altitude platform or a satellite, and the like. This is not specifically limited in embodiments of this application. The RAN in this application may be a 5G RAN or a 6G RAN. This is not limited in this application.

### III. CN 103

The CN 103 (which is referred to as a CN for short below) may include one or more CN devices (to be specific, which may be understood as network element devices or function network elements (network functions, NFs)). The CN device is collectively referred to as a core network element (for example, a first core network element and a second core network element below) below.

FIG. 1b is a diagram of a structure of a CN according to this application. The CN in FIG. 1b is a diagram of the CN in a 5G network architecture. The CN shown in FIG. 1b includes a plurality of CN devices: a network slice selection function (network slice selection function, NSSF), a network exposure function (network exposure function, NEF), a network repository function (network function repository function, NRF), a policy control function (policy control function, PCF), a unified data management (unified data management, UDM), an application function (application function, AF), a network control function (network control function, NCF), a network slice specific authentication and authorization function (network slice specific authentication and authorization function, NSSAAF), an authentication server function (authentication server function, AUSF), an access and mobility management function (access and mobility management function, AMF), a session management function (session management function, SMF), a user plane function (user plane function, UPF), a service communication proxy (service communication proxy, SCP), and network slice admission control (Network Slice Admission Control Function, NSACF).

The AMF is a control plane function provided by an operator network, and is responsible for access control and mobility management for accessing the operator network by a terminal device, for example, including functions such as mobile state management, allocation of a temporary user identifier, and user authentication and authorization.

The SMF is a control plane function provided by the operator network, and is responsible for managing a protocol data unit (protocol data unit, PDU) session of the terminal device. The PDU session is a channel for PDU transmission, and the terminal device and a DN need to perform PDU transmission to each other through the PDU session. The SMF is responsible for setup, maintenance, deletion, and the like of the PDU session. The SMF includes functions related to a session, for example, session management (for example, session setup, modification, and release, including tunnel maintenance between the UPF and the RAN), selection and control of the UPF, service and session continuity (service and session continuity, SSC) mode selection, and roaming.

The PCF is a control plane function provided by an operator, including a user subscription data management function, a policy control function, a charging policy control function, quality of service (quality of service, QoS) control, and the like, and is mainly configured to provide a PDU session policy for the SMF. The policy may include a charging-related policy, a QoS-related policy, an authorization-related policy, and the like.

The UPF is a gateway provided by the operator and a gateway for communication between the operator network and the DN. The UPF includes user plane-related functions such as data packet routing and transmission, packet detection, quality of service (quality of service, QoS) processing, uplink packet detection, and downlink data packet storage.

The UDM is mainly configured to: manage subscription data and authentication data of a user, and perform authentication credit processing, user identifier processing, access authorization, registration/mobility management, subscription management, short message management, and the like. In some embodiments, the UDM may further include a unified data repository (unified data repository, UDR). Alternatively, in some other embodiments, a 3GPP SBA in a 5G system may further include the UDR. The UDR is configured to: store and retrieve a PCF policy, store and retrieve structured data for exposure, store user information requested by the application function, and the like.

The CN devices may also be referred to as network elements or function network elements. In a 5G communication system, function network elements may be names of the function network elements shown in FIG. 1b. In a communication system (for example, a 6G communication system) evolved after 5G, function network elements may still be the names of the function network elements shown in FIG. 1b, or may have other names. For example, in the 5G communication system, a policy control network element may be the PCF. In the communication system (for example, the 6G communication system) evolved after 5G, the policy control function may still be the PCF, or may have another name. This is not limited in this application.

In FIG. 1b, Npcf, Nudm, Naf, Namf, Nsmf, N1, N2, N3, N4, and N6 are interface sequence numbers. For meanings of these interface sequence numbers, refer to meanings defined in related standard protocols. This is not limited herein.

### IV. DN

The DN, also be referred to as a packet data network (packet data network, PDN), is a network located outside the operator network. The operator network may access a plurality of DNs. Application servers corresponding to a plurality of services may be deployed in the DN, to provide a plurality of possible services for the terminal device.

It should be noted that the system architecture shown in FIG. 1a is merely illustrative, and cannot be considered as a specific limitation on the technical solutions of this application.

To facilitate understanding of content of this solution, the following further explains and describes some terms in embodiments of this application, to facilitate understanding by a person skilled in the art. This part is merely for ease of understanding, and cannot be considered as a specific limitation on this application.

### 1. Edge computing (Edge computing, EC)

In an EC deployment scenario, one service being served by a plurality of edge servers (edge application servers, EASs) deployed at a network edge is supported. These ESAs provide a same service and same content, but have different internet protocol (Internet Protocol, IP) addresses. When the terminal device needs to access the service, the terminal device may access an available EAS nearest to the terminal device, so that the available EAS provides a business service for the terminal device. This implements local processing of distributed service traffic, and avoids excessive centralization of traffic at a gateway and an equipment room.

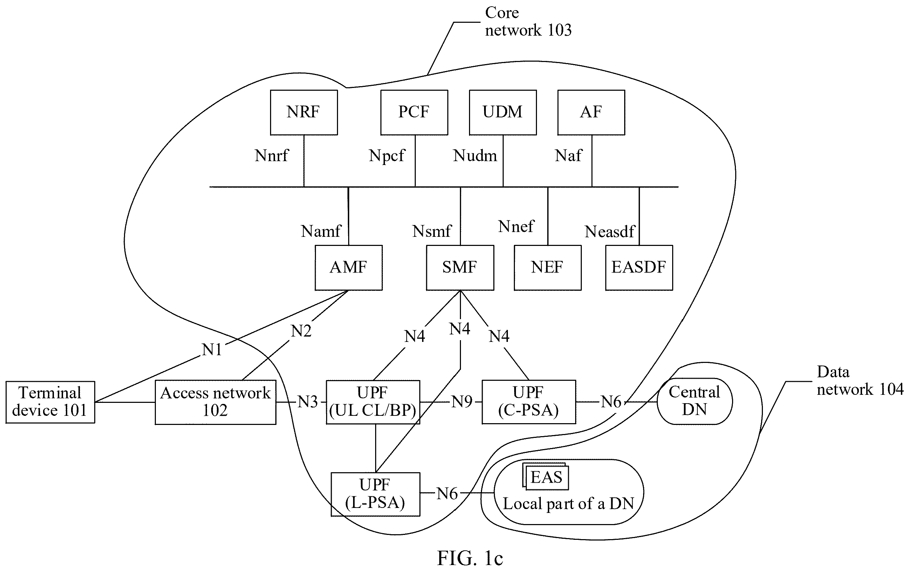

In an EC network architecture, a plurality of session anchor UPFs are inserted into a user plane path of one protocol data unit (protocol data unit, PDU) session, to support a connection to the DN, so that the terminal device can access an application in a local DN nearby. For example, FIG. 1c is a diagram of an architecture of an EC network. In comparison with the network architecture shown in FIG. 1b, an edge application server discovery function (edge application server discovery function, EASDF) and a plurality of UPFs are introduced in the architecture of the EC network shown in FIG. 1c. The plurality of UPFs include an uplink classifier (uplink classifier, UL CL)/a branching point (branching point, BP) and at least one session anchor (PDU session anchor, PSA). The at least one PSA includes a central PSA (namely, a C-PSA) and a local PSA (namely, an L-PSA).

The EASDF is mainly configured to process a domain name system (domain name system, DNS) message based on an indication of an SMF, including: reporting the DNS message to the SMF; adding an extended mechanisms for DNS (extended mechanisms for DNS, EDNS) client subnet option (also referred to as an ECS option) to a DNS request (referred to as a DNS query); forwarding the DNS query to a DNS server; forwarding a DNS response (referred to as a DNS response) to a terminal device; and the like.

The UL CL/BP is configured to: receive an uplink data packet from the terminal device, and distribute the uplink data packet to a corresponding PSA according to a distribution rule; and receive a downlink data packet from the PSA, and send the downlink data packet to the terminal device.

The PSA is configured to: receive the uplink data packet from the UL CL/BP, and connect, based on the uplink data packet, to a corresponding DN. The C-PSA is connected to a central DN (that is, a central DN in FIG. 1c), and the L-PSA is connected to a local DN (that is, a local part of a DN corresponding to the EAS in FIG. 1c).

### 2. Procedure of discovering an EAS by a terminal device

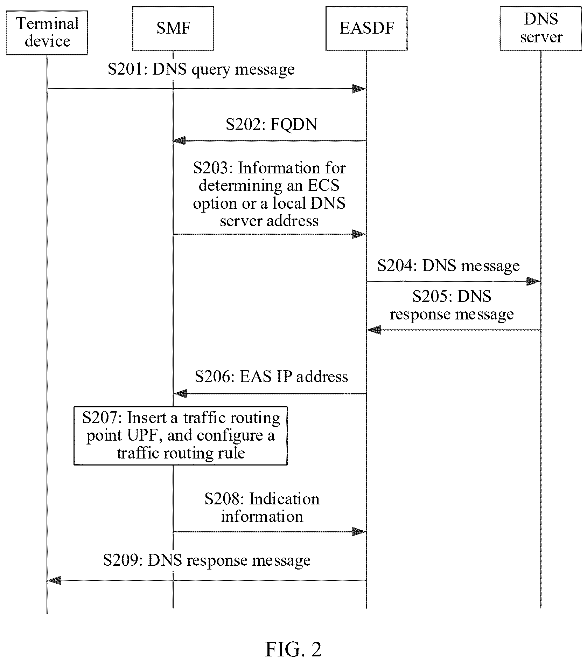

FIG. 2 is a schematic flowchart of discovering an EAS by a terminal device.

S201: The terminal device sends a DNS query message to an EASDF, where the DNS query message includes a fully qualified domain name (Fully Qualified Domain Name, FQDN).

The FQDN includes both a host name and a domain name. Therefore, a location of a host in a domain name tree can be accurately represented by using the FQDN.

S202: The EASDF matches the FQDN with a DNS processing rule, and when matching succeeds, reports the FQDN to an SMF.

The DNS processing rule indicates processing by the EASDF on a DNS message. The DNS processing rule may be sent by the SMF to the EASDF in a PDU session setup phase or a PDU session modification phase. Specifically, in the PDU session setup phase, the SMF receives a PDU session setup request message from an AMF, and selects, based on the PDU session setup request message, an EASDF corresponding to a PDU session. Further, the SMF sends the DNS processing rule to the EASDF. In a PDU session modification procedure, the SMF may update the DNS processing rule based on a change (or another reason) of a deployment status of an edge service. Further, the SMF sends an updated DNS processing rule to the EASDF.

S203: The SMF determines, based on the FQDN and a location of the terminal device, and returns, to the EASDF, information for determining an ECS option or a local DNS (local DNS, L-DNS) server address.

It should be noted that the L-DNS is a DNS server deployed locally on the terminal device, and even if the DNS query message does not include information representing a location of a UE, the L-DNS parses a local EAS IP address of the UE based on a location of the L-DNS.

S204: The EASDF sends the DNS message to the DNS server.

Specifically, if the EASDF receives first information from the SMF in S203, the EASDF determines the ECS option based on the first information, adds the ECS option to the DNS query message, and further forwards the DNS query message to a central DNS (Central DNS, C-DNS) server. Alternatively, if receiving the L-DNS server address from the SMF in S203, the EASDF forwards the DNS Query message to an L-DNS server.

S205: The EASDF receives a DNS response (referred to as a DNS response) message from the DNS server, where the DNS response message includes an EAS IP address.

S206: The EASDF matches the EAS IP address with the DNS processing rule, and if matching succeeds, stores the DNS response message, and reports the EAS IP address to the SMF.

S207: The SMF inserts a traffic routing point UPF based on the EAS IP address, and configures a traffic routing rule.

S208: The SMF sends indication information to the EASDF, where the indication information indicates the EASDF to send the DNS response message to the terminal device.

S209: The EASDF sends the DNS response message to the terminal device based on the indication information.

Further, after discovering, based on the procedure shown in FIG. 2, the EAS that provides a business service for the terminal device, the terminal device saves (or understood as storing) an address (for example, the EAS IP address) for accessing the service, to help the terminal device access the service again. However, when the service may be served by using a plurality of addresses, if a terminal device 1 has previously accessed the service by using an address before becoming a member of a device group (to be specific, the terminal device 1 and another terminal device form the device group, and therefore the terminal device 1 is referred to as a device in the device group), after the terminal device 1 becomes the member of the device group, the terminal device 1 directly accesses the service again by using the stored address at which the service has previously been accessed, and it cannot be ensured that the terminal device 1 can access the service by using a common address corresponding to the device group. This increases interaction latency of the terminal device 1 for service data, and lowers quality of service for a user.

This application first provides a communication method to avoid a case in which quality of service for a first terminal device is lowered because the first terminal device (a device that has previously accessed a first service before being teamed up) in a device group cannot access the first service by using a first address corresponding to the device group. The following further describes the communication method and a communication apparatus provided in this application with reference to accompanying drawings.

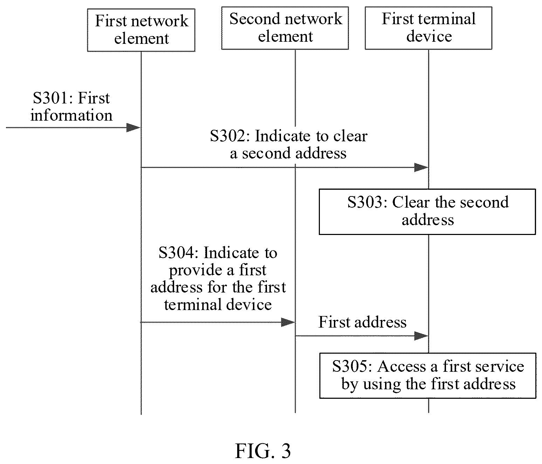

FIG. 3 is a schematic flowchart of a communication method according to an embodiment of this application. The communication method may be specifically a communication method for supporting service access. As shown in FIG. 3, the communication method includes the following S301 to S305. The method shown in FIG. 3 is described by using an example in which the method is performed by a first network element and a first terminal device. It may be understood that the first network element may be alternatively a chip in the first network element, or an apparatus used together with the first network element, and the first terminal device may be alternatively a chip in the first terminal device, or an apparatus used together with the first terminal device. It should be noted that the first network element is configured to provide a session management service for the first terminal device. For example, the first network element is an SMF in a 5G core network architecture.

S301: The first network element receives first information, where the first information indicates each terminal device in a device group to access a first service by using a first address.

In other words, the first network element receives the first information from another network element (a device that has a communication connection to the first network element, for example, a server or an application function network element that provides the first service, a policy control function network element, a data storage network element, a network function exposure network element, or a network element that provides an access control and mobility management service). The first information indicates information about the device group and information about the first service. The information about the device group identifies terminal devices in a same device group. The information about the device group includes but is not limited to a group identifier of the device group, a list of terminal devices belonging to the device group, or a combination thereof. The information about the first service identifies a service accessed by the device group. The information about the first service includes but is not limited to a service identifier of the first service, a common address (that is, the first address mentioned in this application) at which the device group accesses the first service, an FQDN, an identifier of an application (Application, APP) corresponding to the first service, and the like. It should be noted that the address mentioned in this application includes but is not limited to an EAS address, an IP address, a data network access identifier (data network access identifier, DNAI), and the like.

For example, the application function network element configured to provide the first service determines (or understood as generating) device group setup/update information (that is, the first information). The device group setup/update information indicates to set up a terminal device 1 to a terminal device 4 that access a service 1 as a device group. The device group setup/update information includes a terminal device list including identifiers of the terminal device 1 to the terminal device 4, and an EAS address corresponding to the service 1. Optionally, the device group setup/update information further includes a device group identifier 1 indicating the device group. Further, the application function network element sends the first information to the first network element through the network exposure function, the data storage network element, and the policy control function network element.

It should be noted that there is one or more first network elements. It may be understood as that when a same first network element provides the session management service for a plurality of terminal devices in the device group, there is one first network element; or when a plurality of first network elements provide session management services for a plurality of terminal devices in the device group, there are a plurality of first network elements. A quantity of first network elements is not specifically limited in this application. The following provides descriptions only by using an example of the first network element that provides the session management service for the first terminal device, and should not be considered as a specific limitation on this application. The information about the device group may be fixed, or may dynamically change. For example, the information about the device group dynamically changes based on a requirement of a terminal device in the device group for accessing the first service. For example, the device group includes the terminal device 1 to the terminal device 3 at a moment t1, and the device group includes the terminal device 1, the terminal device 3, and the terminal device 4 at a moment t2. A plurality of terminal devices belonging to a same device group may be in different service access states. For example, the device group at the moment t2 includes the terminal device 1 to the terminal device 3. The terminal device 1 has previously accessed the service (to be specific, the terminal device 1 has previously accessed the service before the moment t2 and stops accessing the service at the moment t2), the terminal device 2 is accessing the service at the moment t2, and the terminal device 3 is about to access the service (to be specific, the terminal device 3 has not accessed the service before the moment t2 and has a requirement for accessing the service after the moment t2).

S302: The first network element indicates the first terminal device in the device group to clear a second address, where the second address includes an address at which the first terminal device has previously accessed the first service.

The first network element determines the first terminal device from the device group, and sends clearing indication information to the first terminal device. The clearing indication information indicates the first terminal device to clear the second address (including the address at which the first terminal device has previously accessed the first service) in a storage (or a cache). It should be understood that if the first terminal device has stopped accessing the first service at the moment t2, an address at which the first terminal device has previously accessed the first service at the moment t2 is an address at which the first terminal device accesses the first service before the moment t2; or if the first terminal device is accessing the first service at the moment t2, an address at which the first terminal device has previously accessed the first service at the moment t2 includes an address (that is, an address used when a terminal device accesses the first service at the moment t2) at which the first terminal device accesses the first service this time.

The following first describes in detail manners in which the first network element determines the first terminal device from the device group.

Manner 1: The first network element determines the first terminal device based on information about a terminal device served by the first network element and the information about the device group.

In other words, the first network element determines, as the first terminal device, a terminal device included in a set intersection between a set of first devices (that is, a set that is of devices and that includes terminal devices served by the first network element) and a set of second devices (that is, a set that is of devices and that includes each terminal device in the device group). The first terminal device needs to clear the second address.

For example, the set of first devices served by the first network element includes the terminal device 1, the terminal device 2, the terminal device 3, a terminal device 5, and a terminal device 6. The set of second devices indicated by the information about the device group includes the terminal device 1, the terminal device 2, the terminal device 3, and the terminal device 4. In this case, the set intersection between the set of first devices and the set of second devices includes the terminal device 1, the terminal device 2, and the terminal device 3, and the first network element determines all the terminal device 1, the terminal device 2, and the terminal device 3 as the first terminal device.

Manner 2: The first network element receives second information, where the second information indicates a terminal device that is in the device group and that needs to clear an address (that is, the address at which the first service has previously been accessed) related to the first service. Further, the first network element determines, based on the second information, that the first terminal device needs to clear the second address.

It may be understood as that, in other words, the first network element receives the second information from another network element (a device that has a communication connection to the first network element, for example, a server or an application function network element that provides the first service, a policy control function network element, a data storage network element, a network function exposure network element, or a network element that provides an access control and mobility management service). The second information indicates a set of third devices (to be specific, a set of terminal devices that are in the device group and that need to clear an address at which the first service has previously been accessed). Further, the first network element determines, as the first terminal device, a terminal device included in a set intersection between a set of first devices (that is, a set that is of devices and that includes terminal devices served by the first network element) and a set of third devices. The first terminal device needs to clear the second address.

For example, the set of first devices served by the first network element includes the terminal device 1, the terminal device 2, the terminal device 3, a terminal device 5, and a terminal device 6. The set of second devices indicated by the information about the device group includes the terminal device 1, the terminal device 2, the terminal device 3, and the terminal device 4. An AF corresponding to the first service determines that the terminal device 1, the terminal device 2, and the terminal device 4 in the device group have accessed the first service. In this case, the AF sends the second information to the first network element. The second information indicates that the set of third devices includes the terminal device 1, the terminal device 2, and the terminal device 4. In this case, the set intersection between the set of first devices and the set of third devices includes the terminal device 1 and the terminal device 2, and the first network element determines the terminal device 1 and the terminal device 2 as the first terminal device.

It should be noted that the second information in Manner 2 and the first information may be carried in a same message or different messages. This is not specifically limited in this application. The second information includes the clearing indication information and an identifier of a terminal device (the terminal device that needs to clear the address related to the first service). Alternatively, the second information includes only an identifier of a terminal device (the terminal device that needs to clear the address related to the first service). For example, the second information is carried in a message 1, and a field 1 in the message 1 indicates the terminal device that needs to clear the address related to the first service. When the field 1 includes identifiers of the terminal device 1 to the terminal device 3, the field 1 indicates that the terminal device 1 to the terminal device 3 need to clear addresses related to the first service. Alternatively, the second information includes only the clearing indication information. It may be understood as that in this case, the terminal device (the terminal device that needs to clear the address related to the first service) indicated by the second information is all terminal devices in the device group.

Manner 3: The first network element determines, based on a set of an association relationship between a service and a session, a first session that has an association relationship with the first service. Further, the first network element determines that the first terminal device in which the first session is set up needs to clear the second address.

For example, a set of first devices served by the first network element includes the terminal device 1, the terminal device 2, the terminal device 3, a terminal device 5, and a terminal device 6. A set of second devices indicated by the information about the device group includes the terminal device 1, the terminal device 2, the terminal device 3, and the terminal device 4. The set of the association relationship between the service and the session is shown in Table 1. In this case, the first network element determines a session 1 that has an association relationship with the first service, and determines, as the first terminal device, the terminal device 1 (that is, a terminal device in which the session 1 is set up) corresponding to the session 1. The first terminal device needs to clear the second address.

**Table 1**

| Service identifier | Session identifier |
|---|---|
| Service 1 | Session 1 (terminal device 1) |
| Service 2 | Session 2 (terminal device 2) |
| Service 2 | Session 3 (terminal device 3) |
| Service 3 | Session 4 (terminal device 5) |
| Service 4 | Session 5 (terminal device 6) |

In a possible implementation of Manner 3, a set of an association relationship of the session may be stored in the first network element. The set of the association relationship includes the association relationship between the first service and the first session. For example, when a second network element detects a service (the first service is used as an example below) that supports the device group (which may be understood as supporting teaming up), the first network element receives the information that is about the first service and that is from the second network element. The first service has the association relationship with the first session (in other words, the first session is used to access the first service). The first network element stores the association relationship between the first service and the first session.

In a possible implementation of Manner 3, the first network element may obtain the set of the association relationship between the service and the session from the device (for example, a second network element) that has the communication connection to the first network element. For example, when the second network element detects a service (the first service is used as an example below) that supports the device group (which may be understood as supporting teaming up), the second network element stores the association relationship between the first service and the first session (that is, a session used to access the first service). The first network element sends a query request message to the second network element, and receives a query response message from the second network element. The query response message includes the set of the association relationship between the service and the session.

It should be noted that the second network element is a network element configured to discover an application server (for example, an edge server). For example, the second network element is an EASDF. The association relationship between the service and the session includes but is not limited to one or more of the following: an association relationship between a service identifier and a session identifier, an association relationship between the service identifier and an address of a terminal device in which a session is set up, an association relationship between a service address and the session identifier, and an association relationship between the service address and the address of the terminal device in which the session is set up. The association relationship between the service and the session may be understood as a relationship between a service and a session that supports accessing the service. The session that supports accessing the service includes a session that is accessing the service, or a session that has a same name as a network slice or a data network corresponding to the service or a session that has a same name as both a network slice and a data network corresponding to the service.

S303: The first terminal device clears the second address.

The first terminal device clears the second address based on the clearing indication information from the first network element. It should be noted that clearing the second address mentioned in this application may be understood as refreshing (or deleting) information that is about the second address and that is stored (or cached) by the terminal device, or an association relationship between the second address and the service. For "clearing the second address", "clearing an address 1", "clearing an address", and the like mentioned below, refer to this explanation. For example, the clearing indication information indicates to clear the address (that is, the second address) at which the first service has previously been accessed, and a second terminal device determines, from a storage, the address at which the first service has previously been accessed, and deletes the address from the storage of the terminal device.

In a possible implementation, the second address may further include an address at which the first terminal device has previously accessed a second service, and the second service is different from the first service. Alternatively, the second address may further include an address at which the first terminal device has previously accessed each service other than the first service. Alternatively, the second address further includes an address at which the first terminal device has previously accessed each service other than the first service in a session of the first service. In other words, after determining the first terminal device, the first network element indicates the first terminal device to clear the address (that is, the second address) at which the service has previously been accessed. In this case, the second terminal device deletes, from the storage, addresses at which all services (including the first service) have previously been accessed by the first terminal device, to implement effect of clearing the address at which the first terminal device has previously accessed the first service. It may be understood as that the first network element indicates, in a coarse-grained manner, the first terminal device to clear the address, and the terminal device efficiently clears the address based on the indication of the first network element.

S304: The first network element indicates the second network element to provide the first address for the first terminal device. Correspondingly, the first terminal device receives the first address.

After the first terminal device clears the second address, the first network element indicates the second network element to provide the first address at which the device group to which the first terminal device belongs accesses the first service. The first address may be understood as a common address corresponding to the first service accessed by each terminal device in the device group, so that the first terminal device subsequently accesses the first service by using the first address. The first address may be the same as or different from the second address. When the second address is different from the first address, the technical solution provided in this application achieves an optimal effect.

In a possible implementation, the first network element indicates the second network element to provide, for the first terminal device, the first address queried from a DNS server. For example, after the first terminal device clears the second address based on the indication, the first terminal device sends a DNS query message to the second network element. The DNS query message includes an FQDN of the first service. When the FQDN successfully matches a DNS processing rule sent by the first network element, the second network element reports the FQDN to the first network element. When the first network element learns that a UDR does not store the first address at which the device group to which the first terminal device belongs accesses the first service (which may be understood as that after the device group is set up, the first terminal device is a 1^{st} device that accesses the first service in the device group), the first network element indicates, in a manner described in S203 to S209, the second network element to send the first address to the first terminal device, and the first network element stores the first address and the information about the device group in the UDR in an association manner.

In a possible implementation, the first network element provides the first address for the second network element, and indicates the second network element to provide the first address for the first terminal device. For example, after the first terminal device clears the second address based on the indication, the first terminal sends a DNS query message to the second network element. The DNS query message includes an FQDN of the first service. When the FQDN successfully matches a DNS processing rule sent by the first network element, the second network element reports the FQDN to the first network element. When the first network element learns that the UDR stores the first address at which the device group to which the first terminal device belongs accesses the first service (which may be understood as that after the device group is set up, the first terminal device is not the 1^{st} device that accesses the first service in the device group, or the application function network element provides the first address that requires the device group to access and stores the first address in the UDR), the first network element obtains the first address from the UDR, and sends the first address to the second network element, so that the second network element provides the first address for the first terminal device.

S305: The first terminal device accesses the first service by using the first address.

The first terminal device accesses the first service by using the common address (that is, the first address) at which the device group to which the first terminal device belongs accesses the first service.

According to this method, the first terminal device that is in the device group and that has previously accessed the first service may access the first service by using the first address corresponding to the device group to which the first terminal device belongs. This ensures that the first terminal device accesses the first service by using an address corresponding to the device group, to improve quality of service for the first terminal device. It may be understood that when a same first network element provides the session management service for each terminal device in the device group, to be specific, there is one first network element, according to the method shown in FIG. 3, each terminal device in the device group may access the first service by using the common address (that is, the first address) of the device group, to improve quality of service for the terminal device in the device group. When the plurality of first network elements provide the session management services for the plurality of terminal devices included in the device group, and there are the plurality of first network elements, according to the method shown in FIG. 3, the terminal device that belongs to the device group and that is served by each first network element accesses the first service by using the common address of the device group, to improve the quality of service for the terminal device in the device group.

This application further provides another communication method to avoid a case in which quality of service for the first terminal device is lowered because the first terminal device (a device that has previously accessed the first service before being teamed up) in the device group cannot access the first service by using the first address corresponding to the device group. The following further describes the communication method and a communication apparatus provided in this application with reference to accompanying drawings.

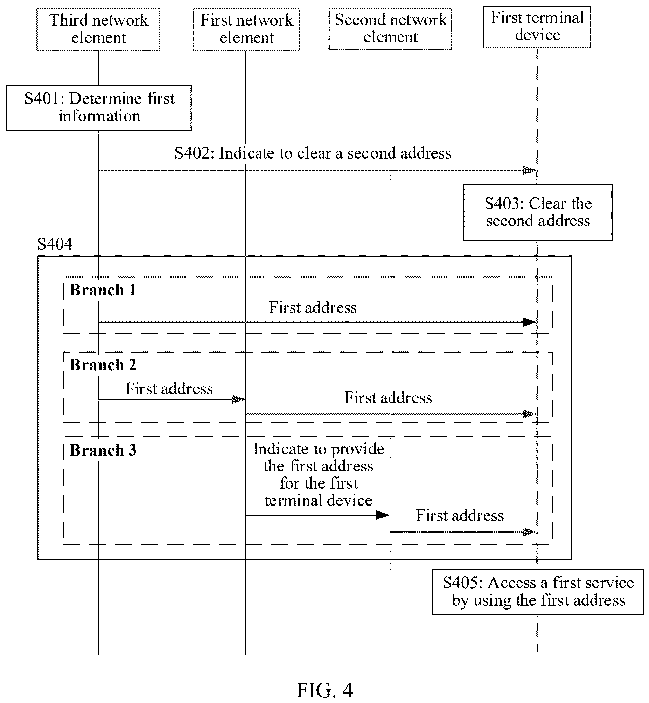

FIG. 4 is a schematic flowchart of another communication method according to an embodiment of this application. The communication method may be specifically a communication method for supporting service access. As shown in FIG. 4, the communication method includes the following S401 to S405. The method shown in FIG. 4 is described by using an example in which the method is performed by a third network element and a first terminal device. It may be understood that the third network element may be alternatively a chip in the third network element, or an apparatus used together with the third network element, and the first terminal device may be alternatively a chip in the first terminal device, or an apparatus used together with the first terminal device. It should be noted that the third network element is configured to provide a first service for the first terminal device. For example, the third network element is a server/an AF that provides the first service.

S401: The third network element determines first information, where the first information indicates each terminal device in a device group to access the first service by using a first address.

The first service is a service that supports the device group (to be specific, a terminal device and another terminal device may be teamed up to access the first service). It may be understood as that after accessing the first service, terminal devices in a same device group may exchange data of the first service. For example, a terminal device 1 to a terminal device 5 are teamed up to perform team competition of a game 1. In this case, the game 1 may be understood as the first service. The first information may be setup/update information of the device group. For specific descriptions of the first information, refer to the descriptions of the first information in S301. Details are not described herein again.

In other words, the third network element determines, based on a teaming up requirement of the terminal device that accesses the first service, the setup/update information (that is, the first information) of the device group corresponding to the first service. For example, a service 1 is a service that supports the device group (or understood as that a terminal device and another terminal device may be teamed up to access the service 1). The third network element determines that the terminal device 1 to the terminal device 5 have a teaming up requirement for the service 1, and then the third network element determines the first information. The first information indicates: information about the device group: The device group includes the terminal device 1 to the terminal device 5; and information about the first service: an identifier of the service 1.

It should be noted that in this application, one service may correspond to one or more device groups, and one terminal device may access a plurality of services, and belong to a plurality of device groups. This application provides illustratively descriptions only by using an example in which one service corresponds to one device group, and one terminal device accesses one service, and should not be considered as a specific limitation on this application.

S402: The third network element indicates the first terminal device in the device group to clear a second address, where the second address includes an address at which the first terminal device has previously accessed the first service.

The third network element sends clearing indication information to the first terminal device by using an application layer message. The clearing indication information indicates the first terminal device to clear the second address. The second address includes the address at which the first terminal device has previously accessed the first service. The following describes in detail manners in which the third network element determines the first terminal device from the device group.

Manner 1: The third network element obtains an access record set of the first service, and determines, based on the access record set, that the first terminal device that has previously accessed the first service needs to clear the second address.

In this manner, the third network element may store the access record set of the first service, or the third network element may obtain the access record set of the first service from another device (a device that has a communication connection to the third network element). This is not specifically limited in this application. Further, the third network element determines, as the first terminal device based on the access record set and the information about the device group, a terminal device that is in the device group and that has previously accessed the first service.

For example, the device group indicated by the information about the device group includes the terminal device 1, the terminal device 2, the terminal device 3, and the terminal device 4. When the third network element is the AF, the AF may receive a notification message from an application server (configured to provide the first service). The notification message indicates the access record set of the first service. The access record set includes access records of accessing the first service by the terminal device 1 and the terminal device 5. Further, the AF determines, as the first terminal device based on the access record set, the terminal device 1 that is in the device group and that has previously accessed the first service.

Manner 2: The third network element sends the information about the device group to a first network element. The first network element is configured to provide a session management service for the first terminal device in the device group. The third network element receives indication information from the first network element, where the indication information indicates that a first session for accessing the first service is set up in the first terminal device. Further, the third network element determines, based on the indication information, that the first terminal device needs to clear the second address.

In other words, the third network element sends the information about the device group to the first network element (the following uses an example in which the first network element is an SMF) configured to provide the session management service. The SMF determines, based on the information about the device group, whether a terminal device that belongs to the device group and in which the first session for accessing the first service is set up exists in terminal devices served by the SMF. If the terminal device exists, the SMF determines, as the first terminal device, the terminal device in which the first session is set up, and sends the indication information (for example, an identifier of the first terminal device or address information of the first terminal device) to the third network element to indicate the first terminal device. Further, the third network element determines the first terminal device from the device group based on the indication information.

It should be noted that one or more first network elements may provide the session management service for the terminal device in the device group. In other words, in Manner 2, the third network element may send the information about the device group to one or more first network elements. Each first network element determines, based on the information about the device group, whether a first terminal device that belongs to the device group and in which the first session is set up exists in terminal devices served by the first network element. When the first terminal device exists, the first network element sends, to the third network element, the indication information indicating the first terminal device. If the first terminal device does not exist, the first network element may send, to the third network element, the indication information indicating that the first terminal device does not exist. Alternatively, if the third network element receives, within preset duration, no indication information from the first network element, the third network element determines that the first terminal device does not exist in the terminal devices served by the first network element.

S403: The first terminal device clears the second address based on an indication of the third network element.

For a specific implementation of S403, refer to the specific implementation of S303. Details are not described herein again.

S404: The first terminal device receives the first address.

The first address is an address at which each terminal device in the device group to which the first terminal device belongs accesses the first service. Specifically, as shown in a branch 1 in S404 in FIG. 4, the first terminal device receives the first address from the third network element, and the first address is carried in the application layer message. Alternatively, as shown in a branch 2 in S404 in FIG. 4, the third network element sends the first address to the first network element, so that the first network element forwards the first address to the first terminal device. Alternatively, as shown in a branch 3 in S404 in FIG. 4, the first terminal device receives the first address in the manner described in S304. Details are not described herein again.

S405: The first terminal device accesses the first service by using the first address.

For a specific implementation of S405, refer to the specific implementation of S305. Details are not described herein again.

According to this method, the first terminal device that is in the device group and that has previously accessed the first service may access the first service by using the first address corresponding to the device group to which the first terminal device belongs. This ensures that the first terminal device accesses the first service by using an address corresponding to the device group, to improve quality of service for the first terminal device.

This application further provides a communication method to avoid a case in which quality of service for the first terminal device is lowered because the first terminal device (a device that has previously accessed the first service before being teamed up) in the device group cannot access the first service by using the first address corresponding to the device group. The following further describes the communication method and a communication apparatus provided in this application with reference to accompanying drawings.

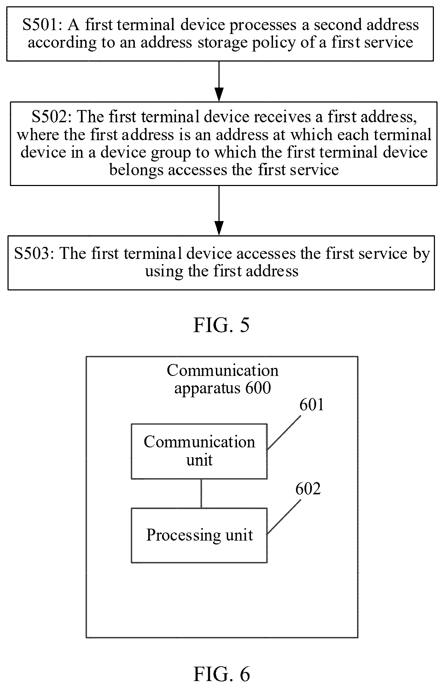

FIG. 5 is a schematic flowchart of still another communication method according to an embodiment of this application. The communication method may be specifically a communication method for supporting service access. As shown in FIG. 5, the communication method includes the following S501 to S503. The method shown in FIG. 5 is described by using an example in which the method is performed by a first terminal device. It may be understood that the first terminal device may be alternatively a chip in the first terminal device, or an apparatus used together with the first terminal device.

S501: The first terminal device processes a second address according to an address storage policy of a first service. The second address includes an address at which the first terminal device has previously accessed the first service. The first service is a service that supports a device group.

It may be understood as that the first terminal device obtains the address storage policy of the first service, where the first service is the service that supports the device group. Further, after accessing the first service, the first terminal device may perform, according to the address storage policy of the first service, corresponding processing on the address at which the first terminal device accesses the first service.

In a case, the address storage policy of the first service is: within preset time, storing an address at which the first service is accessed; and after the preset time is exceeded, clearing the address at which the first service is accessed. In this case, when accessing the first service by using an address 1, the first terminal device stores the address 1 according to the address storage policy, and records a storage moment of the address 1 as a first moment. Then, the first terminal device clears the address 1 at a second moment (a time interval between the second moment and the first moment is the preset time).

In another case, the address storage policy of the first service is: clearing the address at which the first service is accessed. In this case, when accessing the first service by using the address 1, the first terminal device stores the address 1 according to the address storage policy. Further, after obtaining the address storage policy of the first service, the first terminal device clears the address 1 according to the address storage policy.

In still another case, the address storage policy of the first service is that address storage duration of the first service is 0. In this case, when accessing the first service by using the address 1, the first terminal device determines, according to the address storage policy, that storage time of the address 1 is 0 (in other words, the first terminal device does not store the address 1).

The following describes in detail manners in which the first terminal device obtains the address storage policy of the first service.

Manner 1: An application server (or an application function network element corresponding to the application server) configured to provide the first service determines the first terminal device that supports the first service, and sends the address storage policy of the first service to the first terminal device. The address storage policy is carried in an application layer message.

Manner 2: A function network element (for example, an EASDF) configured to discover an application server (for example, an edge application server) receives the address storage policy of the first service, and sends the address storage policy of the first service to the first terminal device.

It may be understood as that the application server (or an application function network element corresponding to the application server) configured to provide the first service sends the address storage policy of the first service to a network element (for example, a UDR) configured to store data, so that the UDR stores the address storage policy of the first service. Further, a network element (for example, a UDM) configured to perform data management obtains the address storage policy of the first service from the UDR, and sends the address storage policy of the first service to the EASDF. Alternatively, a network element (for example, a PCF) configured to provide a policy control function obtains the address storage policy of the first service from the UDR, and sends the address storage policy of the first service to the EASDF. Alternatively, a network element (for example, an SMF) configured to provide a session management service obtains the address storage policy of the first service from the UDR, and sends the address storage policy of the first service to the EASDF.

Manner 3: A network element (for example, an SMF) configured to provide a session management service receives the address storage policy of the first service, and sends the address storage policy of the first service to the first terminal device.

It may be understood as that an application server (or an application function network element corresponding to the application server) configured to provide the first service sends the address storage policy of the first service to a network element (for example, a UDR) configured to store data, so that the UDR stores the address storage policy of the first service. Further, in a setup phase of the first terminal device for a first session (a session for accessing the first service), a network element (for example, a UDM) configured to perform data management obtains the address storage policy of the first service from the UDR, and sends the address storage policy of the first service to the SMF. Alternatively, a network element (for example, a PCF) configured to provide a policy control function obtains the address storage policy of the first service from the UDR, and sends the address storage policy of the first service to the SMF.

In a possible implementation, after obtaining the address storage policy of the first service, the SMF sends a first notification message to a network element (for example, a UPF) configured to provide a user plane management function or the function network element (for example, the EASDF) configured to discover the application server (for example, the edge application server). The first notification message notifies the UPF or the EASDF to send a second notification message to the SMF when the first service is detected. Further, after receiving the second notification message, the SMF sends the address storage policy of the first service to the first terminal device.

Manner 4: A network element (for example, a UDM) configured to perform data management or a network element (for example, a PCF) configured to provide a policy control function sends the address storage policy of the first service to the first terminal device.

It may be understood as that an application server (or an application function network element corresponding to the application server) configured to provide the first service sends the address storage policy of the first service to a network element (for example, a UDR) configured to store data, so that the UDR stores the address storage policy of the first service. Further, in a registration phase of the first terminal device, a network element (for example, a UDM) configured to perform data management obtains the address storage policy of the first service from the UDR, and sends the address storage policy of the first service to the first terminal device. Alternatively, a network element (for example, a PCF) configured to provide a policy control function obtains the address storage policy of the first service from the UDR, and sends the address storage policy of the first service to the first terminal device.

In conclusion, the first terminal device receives an address of the first service from any device of the network element configured to provide the first service for the first terminal device, the network element configured to provide the session management service for accessing the first service for the first terminal device, the function network element configured to discover the application server (for example, the edge application server), or the network element configured to provide the policy management service for accessing the first service for the first terminal device.

S502: The first terminal device receives a first address, where the first address is an address at which each terminal device in the device group to which the first terminal device belongs accesses the first service.

S503: The first terminal device accesses the first service by using the first address.

For specific implementations of S502 and S503, refer to the specific implementations of S404 and S405. Details are not described herein again.

According to this method, the first terminal device that is in the device group and that has previously accessed the first service may access the first service by using the first address corresponding to the device group to which the first terminal device belongs. This ensures that the first terminal device accesses the first service by using an address corresponding to the device group, to improve quality of service for the first terminal device.

To implement functions in the methods provided in the foregoing embodiments of this application, the first network element, the first terminal device, or the third network element may include a hardware structure and/or a software module, and implement the functions in a form of the hardware structure, the software module, or the hardware structure and the software module. Whether a function in the functions is performed in a manner of the hardware structure, the software module, or the hardware structure and the software module depends on a particular application and a design constraint of technical solutions.

As shown in FIG. 6, an embodiment of this application provides a communication apparatus 600. The communication apparatus 600 may be a component (for example, an integrated circuit or a chip) of a first network element, a component (for example, an integrated circuit or a chip) of a first terminal device, or a component (for example, an integrated circuit or a chip) of a third network element. Alternatively, the communication apparatus 600 may be another communication unit, configured to implement methods in method embodiments of this application. The communication apparatus 600 may include a communication unit 601 and a processing unit 602. In a possible design, the communication apparatus may further include a storage unit (not shown in the figure). The storage unit is configured to store data (for example, store an address of an access service and an association relationship between a first service and a first session).

In a possible design, one or more units in FIG. 6 may be implemented by one or more processors, may be implemented by one or more processors and memories, may be implemented by one or more processors and transceivers, or may be implemented by one or more processors, memories, and transceivers. This is not limited in this embodiment of this application. The processor, the memory, and the transceiver may be separately disposed, or may be integrated.

The communication apparatus 600 has a function of implementing the first network element, the first terminal device, or the third network element described in embodiments of this application. For example, the communication apparatus 600 includes a corresponding module, unit, or means (means) for performing the steps of the first network element, the first terminal device, or the third network element described in embodiments of this application. The function, the unit, or the means (means) may be implemented by using software, hardware, hardware executing corresponding software, or a combination of the software and the hardware. For details, further refer to the corresponding descriptions in the foregoing corresponding method embodiment.

In a possible design, the communication apparatus 600 may include the processing unit 602 and the communication unit 601.

The communication unit 601 is configured to receive first information. The first information indicates each terminal device in a device group to access the first service by using a first address.

The processing unit 602 is configured to indicate the first terminal device in the device group to clear a second address. The second address includes the address at which the first terminal device has previously accessed the first service.

The processing unit 602 is further configured to indicate a second network element to provide the first address for the first terminal device, so that the first terminal device accesses the first service by using the first address.

In a possible implementation, the second address further includes an address at which the first terminal device has previously accessed a second service, and the second service is different from the first service.

In a possible implementation, the second address further includes an address at which the first terminal device has previously accessed each service other than the first service.

In a possible implementation, before indicating the first terminal device in the device group to clear the second address, the communication unit 601 is further configured to receive second information, where the second information indicates a terminal device that is in the device group and that needs to clear an address related to the first service. The processing unit 602 is further configured to determine, based on the second information, that the first terminal device needs to clear the second address.

In a possible implementation, before indicating the first terminal device in the device group to clear the second address, the processing unit 602 is further configured to determine, based on a set of an association relationship between a service and a session, the first session that has an association relationship with the first service. Further, the processing unit 602 is further configured to determine that the first terminal device in which the first session is set up needs to clear the second address.

In a possible implementation, the communication unit 601 is further configured to receive information that is about the first service and that is from the second network element. The first service is a service that supports the device group. The first service has the association relationship with the first session. The processing unit 602 is configured to invoke the storage unit to store the association relationship between the first service and the first session.

For more detailed descriptions of the communication unit 601 and the processing unit 602, refer to the related descriptions of the first network element in the method embodiment in FIG. 3. This is not described herein again.

In a possible design, the communication apparatus 600 may include the processing unit 602 and the communication unit 601.

After learning that the first network element indicates to clear the second address, the processing unit 602 is configured to clear the second address. The second address includes the address at which the first terminal device has previously accessed the first service. The first service is the service that supports the device group.

The communication unit 601 is configured to receive the first address. The first address is the address at which each terminal device in the device group to which the first terminal device belongs accesses the first service.

The processing unit 602 is further configured to access the first service by using the first address.

In a possible implementation, the first address is different from the second address.

In a possible implementation, the second address further includes the address at which the first terminal device has previously accessed the second service, and the second service is different from the first service.

In a possible implementation, the second address further includes the address at which the first terminal device has previously accessed the service other than the first service.

In a possible implementation, the communication unit 601 is further configured to send an address query request to the second network element, where the address query request includes the information about the first service, the first service is the service that supports the device group, and the first service has the association relationship with the first session. Further, the processing unit 602 is further configured to receive the second address from the second network element through the first network element.

For more detailed descriptions of the communication unit 601 and the processing unit 602, refer to the related descriptions of the first terminal device in the method embodiment in FIG. 3. This is not described herein again.

In a possible design, the communication apparatus 600 may include the processing unit 602 and the communication unit 601.

After learning that the third network element indicates to clear the second address, the processing unit 602 is configured to clear the second address. The second address includes the address at which the first terminal device has previously accessed the first service.

The communication unit 601 is configured to receive the first address. The first address is the address at which each terminal device in the device group to which the first terminal device belongs accesses the first service.

The processing unit 602 is further configured to access the first service by using the first address.

In a possible implementation, the first address is different from the second address.

In a possible implementation, the second address further includes the address at which the first terminal device has previously accessed the second service, and the second service is different from the first service.

In a possible implementation, the second address further includes the address at which the first terminal device has previously accessed the service other than the first service.

For more detailed descriptions of the communication unit 601 and the processing unit 602, refer to the related descriptions of the first terminal device in the method embodiment in FIG. 4. This is not described herein again.

In a possible design, the communication apparatus 600 may include the processing unit 602 and the communication unit 601.

The processing unit 602 is configured to determine the first information. The first information indicates each terminal device in the device group to access the first service by using the first address.

The processing unit 602 is further configured to indicate the first terminal device in the device group to clear the second address. The second address includes the address at which the first terminal device has previously accessed the first service.

In a possible implementation, the second address further includes the address at which the first terminal device has previously accessed the second service, and the second service is different from the first service.

In a possible implementation, the second address further includes the address at which the first terminal device has previously accessed the service other than the first service.

In a possible implementation, before indicating the first terminal device in the device group to clear the second address, the communication unit 601 is configured to obtain an access record set of the first service. The processing unit 602 is further configured to determine, based on the access record set, that the first terminal device that has previously accessed the first service needs to clear the second address.

In a possible implementation, before indicating the first terminal device in the device group to clear the second address, the communication unit 601 is further configured to send information about the device group to the first network element. The first network element is configured to provide a session management service for the first terminal device in the device group. Further, the communication unit 601 is further configured to receive indication information from the first network element, where the indication information indicates that the first session for accessing the first service is set up in the first terminal device. The processing unit 602 is further configured to determine, based on the indication information, that the first terminal device needs to clear the second address.

For more detailed descriptions of the communication unit 601 and the processing unit 602, refer to the related descriptions of the third network element in the method embodiment in FIG. 4. This is not described herein again.

In a possible design, the communication apparatus 600 may include the processing unit 602 and the communication unit 601.

The processing unit 602 is configured to clear the second address according to an address storage policy of the first service. The second address includes the address at which the first terminal device has previously accessed the first service. The first service is the service that supports the device group.

The communication unit 601 is configured to receive the first address. The first address is the address at which each terminal device in the device group to which the first terminal device belongs accesses the first service.

The processing unit 602 is further configured to access the first service by using the first address.

In a possible implementation, the communication unit 601 is further configured to receive the address storage policy that is of the first service and that is from the first network element.

In a possible implementation, the first network element is configured to provide the first service for the first terminal device. Alternatively, the first network element is configured to provide the session management service for the first terminal device to access the first service. Alternatively, the first network element is configured to provide a policy management service for the first terminal device to access the first service.

For more detailed descriptions of the communication unit 601 and the processing unit 602, refer to the related descriptions of the first terminal device in the method embodiment in FIG. 5. This is not described herein again.

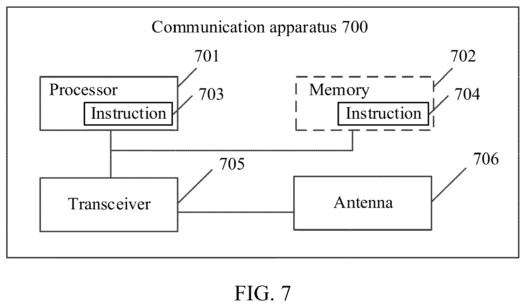

An embodiment of this application further provides a communication apparatus 700. FIG. 7 is a diagram of a structure of the communication apparatus 700. The communication apparatus 700 may be a first network element, or may be a chip, a chip system, a processor, or the like that supports the first network element in implementing the foregoing methods. The communication apparatus 700 may be alternatively a first terminal device, or may be a chip, a chip system, a processor, or the like that supports the first terminal device in implementing the foregoing methods. The communication apparatus 700 may be alternatively a third network element, or may be a chip, a chip system, a processor, or the like that supports the third network element in implementing the foregoing methods. The apparatus may be configured to implement the methods described in the foregoing method embodiments. For details, refer to the descriptions in the foregoing method embodiments.

The communication apparatus 700 may include one or more processors 701. The processor 701 may be a general-purpose processor, a dedicated processor, or the like. For example, the processor 701 may be a baseband processor, a digital signal processor, an application-specific integrated circuit, a field programmable gate array or another programmable logic device, a discrete gate or a transistor logic device, a discrete hardware component, or a central processing unit (central processing unit, CPU). The baseband processor may be configured to process a communication protocol and communication data. The central processing unit may be configured to: control a communication apparatus (for example, a base station, a baseband chip, a terminal, a terminal chip, a distributed unit (distributed unit, DU), or a central unit (central unit, CU)), execute a software program, and process data of the software program.

Optionally, the communication apparatus 700 may include one or more memories 702. The memory 702 may store instructions 704. The instructions may be run on the processor 701, so that the communication apparatus 700 performs the methods described in the foregoing method embodiments. Optionally, the memory 702 may also store data. The processor 701 and the memory 702 may be separately disposed, or may be integrated together.

The memory 702 may include but is not limited to a non-volatile memory such as a hard disk drive (hard disk drive, HDD) or a solid-state drive (solid-state drive, SSD), a random access memory (Random Access Memory, RAM), an erasable programmable read-only memory (Erasable Programmable ROM, EPROM), a ROM, a portable read-only memory (Compact Disc Read-Only Memory, CD-ROM), or the like.

Optionally, the communication apparatus 700 may further include a transceiver 705 and an antenna 706. The transceiver 705 may be referred to as a transceiver unit, a transceiver machine, a transceiver circuit, or the like, and is configured to implement receiving and sending functions. The transceiver 705 may include a receiver and a transmitter. The receiver may be referred to as a receiver machine, a receiver circuit, or the like, and is configured to implement the receiving function. The transmitter may be referred to as a transmitter machine, a transmitter circuit, or the like, and is configured to implement the sending function.

The communication apparatus 700 is the first network element, and is configured to perform the steps performed by the first network element in the communication method shown in FIG. 3.

The communication apparatus 700 is the first terminal device, and is configured to perform the steps performed by the first terminal device in the communication methods shown in FIG. 3 to FIG. 5.

The communication apparatus 700 is the third network element, and is configured to perform the steps performed by the third network element in the communication method shown in FIG. 4.

In another possible design, the processor 701 may include the transceiver configured to implement the receiving and sending functions. For example, the transceiver may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

In still another possible design, optionally, the processor 701 may store instructions 703. The instructions 703 are run on the processor 701, so that the communication apparatus 700 performs the methods described in the foregoing method embodiments. The instructions 703 may be fixed in the processor 701. In this case, the processor 701 may be implemented by using hardware.

In still another possible design, the communication apparatus 700 may include a circuit. The circuit may implement a sending, receiving, or communication function in the foregoing method embodiments. The processor and the transceiver described in this embodiment of this application may be implemented on an integrated circuit (integrated circuit, IC), an analog IC, a radio frequency integrated circuit (radio frequency integrated circuit, RFIC), a mixed-signal IC, an application-specific integrated circuit (application-specific integrated circuit, ASIC), a printed circuit board (printed circuit board, PCB), an electronic device, or the like. The processor and the transceiver may alternatively be manufactured by using various IC process technologies, for example, a complementary metal oxide semiconductor (complementary metal oxide semiconductor, CMOS), an nMetal-oxide-semiconductor (nMetal-oxide-semiconductor, NMOS), a P-type metal oxide semiconductor (positive channel metal oxide semiconductor, PMOS), a bipolar junction transistor (Bipolar Junction Transistor, BJT), a bipolar CMOS (BiCMOS), silicon germanium (SiGe), and gallium arsenide (GaAs).

A scope of the communication apparatus described in embodiments of this application is not limited thereto, and a structure of the communication apparatus may not be limited by that in FIG. 7. The communication apparatus may be an independent device or a part of a large device. For example, the communication apparatus may be:
(1) an independent integrated circuit IC, a chip, or a chip system or subsystem;
(2) a set including one or more ICs, where optionally, the IC set may alternatively include a storage component configured to store data and instructions;
(3) an ASIC, for example, a modem (modulator); and
(4) a module that can be embedded in another device.

The communication apparatus and the chip in embodiments of this application may further perform the implementations described in the communication apparatus 700. A person skilled in the art may further understand that various illustrative logical blocks (illustrative logical blocks) and steps (steps) that are listed in embodiments of this application may be implemented by using electronic hardware, computer software, or a combination thereof. Whether this function is implemented by using hardware or software depends on a particular application and a design requirement of an entire system. A person skilled in the art may use various methods to implement the described function for each particular application, but it should not be considered that the implementation goes beyond the protection scope of embodiments of this application.

This embodiment of this application and the method embodiments shown in the foregoing communication methods are based on a same concept, and bring a same technical effect. For a specific principle, refer to the descriptions of embodiments shown in the foregoing communication methods. Details are not described again.

This application further provides a computer-readable storage medium, configured to store computer software instructions. When the instructions are executed by a communication apparatus, the function in any one of the foregoing method embodiments is implemented.

This application further provides a computer program product, configured to store computer software instructions. When the instructions are executed by a communication apparatus, the function in any one of the foregoing method embodiments is implemented.

This application further provides a computer program. When the computer program runs on a computer, a function in any one of the foregoing method embodiments is implemented.

This application further provides a communication system. The system includes the first terminal device and the first network element that perform the method shown in FIG. 3. Alternatively, the system may further include the first terminal device and the third network element that perform the method shown in FIG. 4. Alternatively, the system may further include the first terminal device that performs the method shown in FIG. 5. In another possible design, the system may further include another device that interacts with the first network element, the first terminal device, or the third network element in solutions provided in this application.

All or a part of the foregoing embodiments may be implemented by using software, hardware, firmware, or any combination thereof. When the software is used to implement embodiments, all or a part of embodiments may be implemented in a form of a computer program product. The computer program product includes one or more computer instructions. When the computer instructions are loaded and executed on a computer, procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a high-density digital video disc (digital video disc, DVD)), a semiconductor medium (for example, an SSD), or the like.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method comprises:
receiving, by a first network element, first information, wherein the first information indicates each terminal device in a device group to access a first service by using a first address;
indicating, by the first network element, a first terminal device in the device group to clear a second address, wherein the second address comprises an address at which the first terminal device has previously accessed the first service; and
indicating, by the first network element, a second network element to provide the first address for the first terminal device.

2. The method according to claim 1, wherein the second address further comprises an address at which the first terminal device has previously accessed a second service, and the second service is different from the first service.

3. The method according to claim 1, wherein the second address further comprises an address at which the first terminal device has previously accessed each service other than the first service.

4. The method according to any one of claims 1 to 3, wherein before the indicating, by the first network element, a first terminal device in the device group to clear a second address, the method further comprises:
receiving, by the first network element, second information, wherein the second information indicates a terminal device that is in the device group and that needs to clear an address related to the first service; and
determining, by the first network element based on the second information, that the first terminal device needs to clear the second address.

5. The method according to any one of claims 1 to 3, wherein before the indicating, by the first network element, a first terminal device in the device group to clear a second address, the method further comprises:
determining, by the first network element based on a set of an association relationship between a service and a session, a first session that has an association relationship with the first service; and
determining, by the first network element, that the first terminal device in which the first session is set up needs to clear the second address.

6. The method according to claim 5, wherein the method further comprises:
receiving, by the first network element, information that is about the first service and that is from the second network element, wherein the first service is a service that supports the device group, and the first service has the association relationship with the first session; and
storing, by the first network element, the association relationship between the first service and the first session.

7. The method according to any one of claims 1 to 6, wherein the indicating, by the first network element, a first terminal device in the device group to clear a second address comprises:
indicating, by the first network element based on the first information, the first terminal device in the device group to clear the second address.

8. The method according to any one of claims 1 to 7, wherein the first network element is a network element SMF configured to provide a session management service.

9. The method according to any one of claims 1 to 8, wherein the first information further indicates:
information about the device group, wherein the information about the device group identifies terminal devices in a same device group; or
the information about the first service, wherein the information about the first service identifies a service accessed by the device group.

10. The method according to claim 9, wherein the information about the device group comprises a group identifier of the device group, a list of terminal devices belonging to the device group, or a combination thereof.

11. The method according to claim 9 or 10, wherein
the information about the first service comprises one or more of the following:
a service identifier of the first service;
a common address at which the device group accesses the first service, wherein the common address is the first address;
a fully qualified domain name FQDN; or
an identifier of an application APP corresponding to the first service.

12. A communication method, wherein the method comprises:
after learning that a first network element indicates to clear a second address, clearing, by a first terminal device, the second address, wherein the second address comprises an address at which the first terminal device has previously accessed a first service, and the first service is a service that supports a device group;
receiving, by the first terminal device, a first address, wherein the first address is an address at which each terminal device in a device group to which the first terminal device belongs accesses the first service; and
accessing, by the first terminal device, the first service by using the first address.

13. The method according to claim 12, wherein the first address is different from the second address.

14. The method according to claim 12 or 13, wherein the second address further comprises an address at which the first terminal device has previously accessed a second service, and the second service is different from the first service.

15. The method according to claim 12 or 13, wherein the second address further comprises an address at which the first terminal device has previously accessed each service other than the first service.

16. The method according to any one of claims 12 to 15, wherein the first network element is a network element SMF configured to provide a session management service.

17. A communication method, wherein the method comprises:
receiving, by a first network element, first information, wherein the first information indicates each terminal device in a device group to access a first service by using a first address;
indicating, by the first network element, a first terminal device in the device group to clear a second address, wherein the second address comprises an address at which the first terminal device has previously accessed the first service;
clearing, by the first terminal device, the second address;
indicating, by the first network element, a second network element to provide the first address for the first terminal device; and
accessing, by the first terminal device, the first service by using the first address.

18. The method according to claim 17, wherein the second address further comprises an address at which the first terminal device has previously accessed a second service, and the second service is different from the first service.

19. The method according to claim 17 or 18, wherein before the indicating, by the first network element, a first terminal device in the device group to clear a second address, the method further comprises:
receiving, by the first network element, second information, wherein the second information indicates a terminal device that is in the device group and that needs to clear an address related to the first service; and
determining, by the first network element based on the second information, that the first terminal device needs to clear the second address.

20. The method according to claim 17 or 18, wherein before the indicating, by the first network element, a first terminal device in the device group to clear a second address, the method further comprises:
determining, by the first network element based on a set of an association relationship between a service and a session, a first session that has an association relationship with the first service; and
determining, by the first network element, that the first terminal device in which the first session is set up needs to clear the second address.

21. The method according to claim 20, wherein before the determining, by the first network element based on a set of an association relationship between a service and a session, a first session that has an association relationship with the first service, the method further comprises:
sending, by the first terminal device, an address query request to the second network element, wherein the address query request comprises information about the first service, the first service is a service that supports the device group, and the first service has the association relationship with the first session;
receiving, by the first network element, the information that is about the first service and that is from the second network element;
storing, by the first network element, an association relationship between the information about the first service and information about the first session; and
indicating, by the first network element, the second network element to provide the second address for the first terminal device.

22. The method according to any one of claims 17 to 21, wherein the indicating, by the first network element, a first terminal device in the device group to clear a second address comprises:
indicating, by the first network element based on the first information, the first terminal device in the device group to clear the second address.

23. The method according to any one of claims 17 to 22, wherein the first network element is a network element SMF configured to provide a session management service.

24. The method according to any one of claims 17 to 23, wherein the first information further indicates:
information about the device group, wherein the information about the device group identifies terminal devices in a same device group; or
the information about the first service, wherein the information about the first service identifies a service accessed by the device group.

25. The method according to claim 24, wherein the information about the device group comprises a group identifier of the device group, a list of terminal devices belonging to the device group, or a combination thereof.

26. The method according to claim 24 or 25, wherein
the information about the first service comprises one or more of the following:
a service identifier of the first service;
a common address at which the device group accesses the first service, wherein the common address is the first address;
a fully qualified domain name FQDN; or
an identifier of an application APP corresponding to the first service.

27. A communication method, wherein the method comprises:
receiving, by a first network element, first information, wherein the first information indicates each terminal device in a device group to access a first service by using a first address;
indicating, by the first network element, a first terminal device in the device group to clear a second address, wherein the second address comprises an address at which the first terminal device has previously accessed the first service;
indicating, by the first network element, a second network element to provide the first address for the first terminal device; and
providing, by the second network element, the first address for the first terminal device based on an indication of the first network element.

28. The method according to claim 27, wherein the indicating, by the first network element, a first terminal device in the device group to clear a second address comprises:
indicating, by the first network element based on the first information, the first terminal device in the device group to clear the second address.

29. The method according to claim 27 or 28, wherein the first network element is a network element SMF configured to provide a session management service.

30. The method according to any one of claims 27 to 29, wherein the first information further indicates:
information about the device group, wherein the information about the device group identifies terminal devices in a same device group; or
information about the first service, wherein the information about the first service identifies a service accessed by the device group.

31. The method according to claim 30, wherein the information about the device group comprises a group identifier of the device group, a list of terminal devices belonging to the device group, or a combination thereof.

32. The method according to claim 30 or 31, wherein
the information about the first service comprises one or more of the following:
a service identifier of the first service;
a common address at which the device group accesses the first service, wherein the common address is the first address;
a fully qualified domain name FQDN; or
an identifier of an application APP corresponding to the first service.

33. A communication method, wherein the method comprises:
sending, by a third network element, first information to a first network element, wherein the first information indicates each terminal device in a device group to access a first service by using a first address;
receiving, by the first network element, the first information, and indicating a first terminal device in the device group to clear a second address, wherein the second address comprises an address at which the first terminal device has previously accessed the first service; and
indicating, by the first network element, a second network element to provide the first address for the first terminal device.

34. The method according to claim 33, wherein the indicating a first terminal device in the device group to clear a second address comprises:
indicating, based on the first information, the first terminal device in the device group to clear the second address.

35. The method according to claim 33 or 34, wherein the first network element is a network element SMF configured to provide a session management service.

36. The method according to any one of claims 33 to 35, wherein the first information further indicates:
information about the device group, wherein the information about the device group identifies terminal devices in a same device group; or
information about the first service, wherein the information about the first service identifies a service accessed by the device group.

37. The method according to claim 36, wherein the information about the device group comprises a group identifier of the device group, a list of terminal devices belonging to the device group, or a combination thereof.

38. The method according to claim 36 or 37, wherein
the information about the first service comprises one or more of the following:
a service identifier of the first service;
a common address at which the device group accesses the first service, wherein the common address is the first address;
a fully qualified domain name FQDN; or
an identifier of an application APP corresponding to the first service.

39. A communication apparatus, wherein the communication apparatus comprises a unit or a module configured to perform the method according to any one of claims 1 to 11, or comprises a unit or a module configured to perform the method according to any one of claims 12 to 16.

40. A communication apparatus, comprising a processor and an interface circuit, wherein the interface circuit is configured to: receive a signal from a device other than the communication apparatus and transmit the signal to the processor, or send a signal from the processor to a device other than the communication apparatus, and the processor is configured to implement the method according to any one of claims 1 to 11 or the method according to any one of claims 12 to 16 by using a logic circuit or by executing code instructions.

41. The communication apparatus according to claim 40, wherein the communication apparatus further comprises a memory, and the memory stores the code instructions or a configuration file of the logic circuit.

42. A communication system, wherein the communication system comprises a first network element and a first terminal device, wherein the first network element is configured to implement the method according to any one of claims 1 to 11, and the first terminal device is configured to implement the method according to any one of claims 12 to 16.

43. A communication system, wherein the communication system comprises a first network element, a second network element, and a first terminal device, wherein the first network element is configured to implement the method according to any one of claims 1 to 11, and the second network element is configured to implement a step performed by the second network element according to any one of claims 27 to 32.

44. A communication system, wherein the communication system comprises a first network element, a third network element, and a first terminal device, wherein the first network element is configured to implement the method according to any one of claims 1 to 11, and the third network element is configured to implement a step performed by the third network element according to any one of claims 33 to 38.

45. A computer-readable storage medium, wherein the storage medium stores a computer program or instructions, and when the computer program or the instructions are executed by an apparatus, the method according to any one of claims 1 to 11 or the method according to any one of claims 12 to 16 is implemented.

46. A computer program product, wherein when the computer program product is read and executed, a communication apparatus is enabled to perform the method according to any one of claims 1 to 11 or the method according to any one of claims 12 to 16.
